# EUROPÄISCHE PATENTSCHRIFT

(11) **EP 0 289 539 B1**
(45) Veröffentlichungstag und Bekanntmachung des Hinweises auf die Patenterteilung: **01.03.1995**
(21) Anmeldenummer: 87906989.6
(22) Anmeldetag: 05.11.1987
(51) Int. Cl.: A62D 3/00, C05D 11/00, A01N 59/06

(54) **BEKÄMPFUNG DER EINWIRKUNGEN AN GRÜNPFLANZEN VON LUFTSCHADSTOFFEN**
PROCESS FOR COMBATING THE HARMFUL EFFECTS ON PLANTS OF TOXIC SUBSTANCES IN THE AIR
PROCEDE POUR LUTTER CONTRE LES DEGATS CAUSES AUX PLANTES VERTES PAR LES MATIERES NOCIVES EN SUSPENSION DANS L'AIR

(30) Priorität: 05.11.1986 CH 4397/86
(43) Veröffentlichungstag der Anmeldung: 09.11.1988
(73) Patentinhaber: DÜRSTELER, Erich, CH-8957 Schlieren (CH)
(72) Erfinder: DÜRSTELER, Erich, CH-8957 Schlieren (CH)
(74) Vertreter: Werffeli, Heinz R., Dipl.-Ing.ETH.
(86) Internationale Anmeldenummer: CH8700150
(87) Internationale Veröffentlichungsnummer: WO8803426

(56) Entgegenhaltungen:
- EP-A- 0 125 370
- EP-A- 0 169 663
- EP-A- 0 207 616
- DE-A- 3 628 611
- US-A- 1 378 284

## Beschreibung

Die Erfindung betrifft ein zugleich vorbeugendes, Weiterschreiten hinderndes sowie kurierendes Verfahren zur Bekämpfung von durch luftgetragene Schadstoffe verursachte Schadstoffeinwirkungen an Grünpflanzen, insbesondere ein Verfahren zur Bekämpfung von immisions- und bodenbeschaffenheitsbedingten "Neuartigen Waldschäden", auch Waldsterben genannt, sowie ein Präparat zur Ausführung dieses Verfahrens. Das Verfahren wird in den Ansprüchen 1 bis 8 und das Präparat in den Ansprüchen 9 und 10 definiert. Die Einsatzmöglichkeiten sind dort gegeben, wo durch die verschiedenen, luftgetragenen oder durch saure Böden verursachten Schadstoffeinwirkungen, insbesondere Nadel- und Laubbäume, einzeln, in Gruppen oder als geschlossene Wälder erkranken und in der Folge möglicherweise absterben.

Das Präparat, insbesondere Kalkhydrat oder ein anderes, Desoxidations- bzw. Neutralisations-Mittel aufweisendes Präparat, in Feinstverteilung auf die Blatt- oder Nadel-Oberflächen appliziert, wirkt hier neutralisierend auf die Schadstoffe und schützt die Pflanzen deshalb von aussen gegen die immissionsbedingten Verletzungen bzw. Erkrankungen durch abpuffern des Schadstoff-Anschlages.

Durch das aufgebrachte Kalkhydrat wird zusätzlich auch der physiologische Zustand des ganzen Baumes und spezifisch der seines Nadel- oder Blatt-Kleides positiv beeinflusst, indem das durch den Schadstoffanschlag verursachte Manko an Calcium- und in geringerem Masse dasjenige an Magnesium-Ionen wieder aufgefüllt wird, wobei auch eine gewisse Translokation stattfindet.

Der Baum ist nun auf Grund seines mittels Calcium- und Magnesium-Ionen revitalisierten Pflanzensaftes befähigt, auch von innen, also systemisch, den immissionsbedingten sowohl als auch den durch saure Böden verursachten Schadstoffanschlägen vermehrt standzuhalten.

Durch die aufs Neue erlangte Widerstandskraft kann der Baum nun auf natürliche Art den verschiedenen Bedrohungen wie Insekten, Pilzen und ungünstigem Klima etc. auf natürliche Art mit gutem Erfolg entgegentreten, ebenso wird sich das natürliche Wachstum wieder einstellen.

Allfällig überschüssiges Kalkhydrat formt sich unter dem Einfluss von Feuchtigkeit und dem normalen Kohlendioxyd-Gehalt der Luft zu Kalkstein zurück, wirkt in dieser allerdings weniger effizienten Form weiter und leistet überdies einen natürlichen, biologisch wertvollen Beitrag zum Wald-Oekosystem.

Dieser Vorgang ist nicht nur auf Laub- oder Nadel-Bäume beschränkt, sondern trifft grundsätzlich auf alle Grünpflanzen zu. Weil sich das Kalkhydrat vollständig zum in der Natur weitverbreiteten und in grossen Mengen vorkommenden Kalkstein umformt, sind keinerlei schädigende Nebenwirkungen auf die Umwelt sowie auch keine irgendwelche Abhängigkeiten zu befürchten.

Der Nutzeffekt der Erfindung besteht darin, die geschädigten oder gefährdeten Bäume und Wälder solange vor den die "Neuartigen Waldschäden" verursachenden Schadstoffen zu schützen und dabei am Leben zu erhalten, bis diese in ausreichendem Masse reduziert worden sind, um diese Behandlung zu erübrigen. Dieser Zustand wird nach derzeitigem Ermessen kaum noch innerhalb nützlicher Frist eintreten um die Wälder zu entlasten, falls die nach dem erfindungsgemässen Verfahren aufgezeigten Massnahmen nicht durchgeführt werden.

Gegenstand der Erfindung ist demnach ein Verfahren und ein Präparat zur Ausführung des Verfahrens, insbesondere zur Behandlung von "Neuartigen Waldschäden", wie in den Patentansprüchen beschrieben.

Gegenwärtiger Stand der Technik ist einerseits mittels einer massiven Ausstreuung normalerweise von Kalkstein in verschiedenartigen Feinheitsgraden und Körnung den pH-Wert des Bodens zu erhöhen wenn dieser sauer ist. Weil aber der Kalkstein, CaCO₃ nur schlecht löslich ist, werden enorme Mengen gebraucht, nämlich 2-5 t/ha um den pH-Wert auch nur leicht um ca. 0,4 anzuheben. Leider betrifft dies auch nur die Bodenoberfläche, sodass der Effekt im wichtigen Feinwurzelbereich verschwindend klein, wenn nicht gar Null ist. Der Erfolg ist fragwürdig, da ein unverhältnismässig hoher Aufwand einen nur minimalen Nutzeffekt ergibt. Es wurde auch festgestellt, dass Waldsterben selbst auch von Natur aus kalkhaltigen Böden auftritt.

Andererseits werden Böden und Pflanzenoberflächen gedüngt, wobei die sogenannte Blattdüngung im Vordergrund steht. Obwohl verschiedenste Substanzen gemischt und einzeln verwendet werden, kann ein Erfolg nur dann erzielt werden, wenn das Waldsterben auf einen Mangel an eben diesen Nährstoffen zurückzuführen ist. Da oft geradezu eine Uebersättigung an Düngerstoffen vorhanden ist, bleiben die Resultate auch dieser Methode, auch wenn in Kombination mit der zuvor genannten angewandt, zweifelhaft und gelegentlich negativ. Es kann selbst mit einer Bewässerung eine momentane Verbesserung des Waldzustandes erreicht werden, sofern zuvor ein gewisser Stress wegen Trockenheit vorhanden war, doch ist dieser nicht von Dauer.

Ueber die Ursache des Problems der "Neuartigen Waldschäden" bestehen verschiedene Hypothesen von Ueberdüngung, sauren Böden, Säureregen, Schwefeldioxyd, Ozon zu Autoabgasen. Fest steht jedoch, dass es sich um umweltverschmutzungsbedingte Schadstoffe handelt, wobei zur Zeit Autoabgase und Ozon vermehrt verdächtigt werden. Die eigentliche Ursache des Waldsterbens ist aber noch nicht ermittelt und bedarf weiterer Studien zur Abklärung.

Die Voraussetzung zu dieser Erfindung war, dass gefunden wurde, wie viele Pflanzenschutzmittel in der Form von feinsten Tröpfchen aerosolartig appliziert unter bestimmten Bedingungen phytotoxisch wirkten, während die gleiche Dosierung unter denselben Umständen in normaler Tropfengrösse seine Nutz-Wirkung ausübte ohne die Pflanzen zu schädigen.

Diese Erfahrung zeigt, dass die Wirkung eines Schadstoffes in Feinstverteilung, wie vorhanden durch Abgase und Stäube, sich vervielfacht gegenüber dem normalen Schadenspotential. Ferner wurde klar, dass die luftgetragenen Schadstoffe die Hauptverursacher sind für das Waldsterben, via Bodenaufnahme könnte die Reaktion nicht so schnell und so akzentuiert erfolgen. Der saure Regen hat aus demselben Grund nur eine untergeordnete Bedeutung, er wäscht wohl die Schadstoffe aus der Luft, aber in grosser Verdünnung, sodass der durch ihn verursachte Schaden relativ unbedeutend ist.

Das Problem beginnt wenn Feuchtigkeit sich mit den aerosolförmigen Schadstoffen durch Wolken und Nebelbildung mischt, speziell bei Inversionen. Die Schadstoffe haben nun Gelegenheit, stunden- wenn nicht tagelang schwebend, sich mit dem Wasser zu Säuren zu verbinden. Unter dem Einfluss der Sonneneinstrahlung bilden Kohlenwasserstoffe und Stickoxyd Ozon. Dieses ist an und für sich schon schädigend für die Pflanzen, wirkt aber als starkes Oxydationsmittel säurebildend auf die aerosolförmigen Wasser-Schadstoff-Tröpfchen, welche wegen ihrer Kleinheit eine sehr grosse Oberfläche zur Reaktion anbieten. So formt sich z.B. gasförmiges Schwefeldioxyd mit Wasser zu schwefliger Säure um, welche unter dem Ozoneinfluss sich zu Schwefelsäure umformt. Aehnlich verhält es sich mit anderen Stoffen, aus Stickstoffoxyden kann sich Salpetersäure bilden usw. Weil auch metallische Stäube vorhanden sind, können sich unter dem Einfluss der nun entstandenen Säuren Kationen bilden, wodurch toxische Metallionen freigestellt werden, welche in den Pflanzenzellen eine Giftwirkung ausüben.

Aus dem Gesagten kann nun geschlossen werden, dass die "Neuartigen Waldschäden" an den Nebel-Obergrenzen und in Höhenlagen mit häufiger Bewölkung und intensiverer Sonneneinstrahlung sowie in Gebieten mit viel Kohlenwasserstoff- und Stickoxyd-Anteilen in der Luft vermehrt auftreten müssten. Hiermit ist erklärt, warum die Wirkung dieser luftgetragenen Schadstoffe sich unter diesen Umständen potenziert, ferner ist zu beachten, wie gross die Gesamtoberfläche des Blattkleides eines Baumes ist, welches dem X-millionenfachen Tröpfchenanschlag praktisch dauernd ausgesetzt ist.

Die Einwirkung der Säuretröpfchen beschädigt die Schutzschicht der Blattoberfläche wodurch das Blatt unter anderem anfällig wird für Pilzerkrankungen. Die Spaltöffnungen verlieren die Schliessfähigkeit und das Blatt wird wehrlos gegen Klima-Einflüsse und verliert Wasser durch verdunsten. Die Säuren, zusammen mit den toxischen Metallionen dringen nun in den Metabolismus der Pflanze ein, wobei der Pflanzensaft versauert und vergiftet wird, wobei die notwendigen Calcium- und Magnesium-Ionen eliminiert werden. Der Baum wird weiter geschwächt, weil er versucht dem Säureanschlag zu widerstehen, indem er Zucker aus seinen Stärkereserven mobilisiert um den pH-Wert des Pflanzensaftes zu erhöhen.

Dieser Vorgang dürfte ihn attraktiver für Schädlingsbefall machen und zudem hält der Baum diese Anstrengung nicht unbegrenzt durch.

Durch die Translokation der Säure werden nun auch die Feinwurzeln, weil in den meisten Fällen nicht genügend basisches Material im Kontaktbereich liegt, geschädigt, während an der gleichen Stelle die Waldbodenoberfläche noch ganz normal erscheinen kann. Der Schadstoffanschlag wird so in der Baumkrone abgepuffert und die negative Bilanz wird im Wurzelraum bemerkbar.

Der Baum schluckt also Gift bis zur Erschöpfung seiner Calciumreserven, weshalb lange nichts passiert, doch nach den ersten Anzeichen schreitet die Erkrankung schnell voran.

Wenn wir nun beispielsweise Kalkhydrat in Feinstverteilung und feiner Korngrösse von kleiner als 350, bevorzugt kleiner als 90 Mikron als Driftwolke auf die Baumkrone oder Waldoberfläche applizieren, so wird es die Blattoberflächen ähnlich umhüllen, wie die Schadstoffwolken. Das Kalkhydrat formt mit der Feuchtigkeit oder Nässe auf dem Blatt eine stark basische Lösung mit der Eigenschaft die Schadstoffangriffe abzupuffern bzw. zu neutralisieren. In der wässerigen Lösung findet eine Reaktion statt, wodurch die positiven sauren Kationen mit den negativen Hydroxylionen des Kalkhydrates ausgetauscht werden. So wird z.B. Phosphorsäure vom Kalkhydrat zu harmlosem Kalkphosphat und Wasser neutralisiert, ähnlich verhält es sich mit Salpeter-, Salz-, Fluss-, Schwefliger-, Schwefel- und den metallischen Kation Säuren.

Die Schadstoffe können so an ihrem Angriffspunkt eliminiert werden, was den Baum von aussen schützt.

Calciumionen können nun durch die Blattzellen aufgenommen werden und werden in die Zellwände eingebaut, was diese erstarken lässt, erfahren eine gewisse Translokation und regulieren den pH-Wert des Pflanzensaftes wieder hoch. Der Einbau der Calciumionen in die Zellwände erfolgt innerhalb weniger Tage, der Baum erlangt hierauf wieder seine natürliche Widerstandskraft um Insekten, Pilz und Klimaanschlägen standzuhalten.

Weil im Frühjahr und Sommer Calciumionen aus dem Wurzelbereich in die Blattorgane transloziert werden und im Herbst wieder zurück, kann auch der Feinwurzelbereich wieder normalisiert werden.

Die Menge des auszubringenden Kalkhydrates hängt von der Vegetationsdichte und dem Schadstoffanfall ab und könnte zwischen 10-200 kg/ha variieren, wobei 50 kg/ha normalerweise genügen sollten.

Ueberschüssiges Kalkhydrat wird durch die Feuchtigkeit und das Kohlendioxyd der Luft zu Kalkstein zurückgeformt und endet schlussendlich auf dem Boden, wo es die Kompostierung der gefallenen Blätter sowie die nützlichen Bakterien und die Regenwürmer fördert und somit einen nützlichen biologischen Zweck ausübt. Eine eventuelle Störung des Oekosystems ist bei dieser Methode schon auf Grund der kleinen ausgebrachten Menge völlig ausgeschlossen.

Versuche an erkrankten Laub- und Nadel-Bäumen sowie anderen Grünpflanzen verschiedenster Art, wie z.B. Tomaten zeigten absolut verblüffende positive Resultate. Bereits gelbliche, chlorosebefallene Blätter und Nadeln erstarkten in kurzer Zeit und erschienen wieder in einem gesunden Grün.

Behandelte Pflanzen konnten einem wesentlich höheren Schadstoffeinfluss ausgesetzt werden, ohne Schaden zu leiden und blieben gesund wo Kontrollpflanzen eingingen. Die Wirkung einer einmaligen Behandlung hielt über eine ganze Vegetationsperiode an, während dieser Zeit fand ein normales Wachstum wiederrum statt, während die Kontrollpflanzen stagnierten.

Es wurde gefunden, dass mit dem erfindungsgemässen Verfahren und Präparat die "Neuartigen Waldschäden" erfolgreich behandelt werden können.

Dank dem Eintreten der Neutralisation auf der Blattoberfläche erfolgt eine direkte Aktion an der Hauptschadenstelle wodurch eine schnelle, wirksame und gezielte Korrektur und damit eine entscheidende Zustandsverbesserung erreicht wird. Ein besonderer Vorzug besteht in dem verhältnismässig bescheidenen Aufwand und der Unschädlichkeit der Methode auf die Umwelt.

Eingriffe zur Kur über den Boden benötigen einen unverhältnismässig grösseren Aufwand mit dem Nachteil einer limitierten Wirkung, weil durch die Eindringtiefe der Baumwurzeln ins Erdreich und dessen Filtriereigenschaften einem Mittel der Zutritt erschwert wird. Auch ist die gesamte Blattoberfläche einer Pflanze in der Regel wesentlich grösser als diejenige der Wurzeln, was einen besseren Wirkungsgrad der beschriebenen Behandlung zur Folge hat. Ein weiterer günstiger Faktor besteht darin, dass die wirksame Gesamtoberfläche des feinen Präparates sehr gross ist, so wird mit idealer Partikelgrösse ein Blaine-Wert von über 10000 cm²/g erreicht.

## Patentansprüche

1. Verfahren zur Bekämpfung oder Verhinderung von durch luftgetragene Schadstoffe verursachte Schadstoffeinwirkungen an Grünpflanzen, dadurch gekennzeichnet, daß ein oder mehrmalig pro Vegetationsperiode in möglichst gleichmäßiger Feinstverteilung ein pulverförmiges dolomitisches Kalkhydrat oder Kalkhydrat (Ca(OH)₂) wie es aus calcitischem Gestein erhältlich ist, mit einer Teilchengrösse kleiner als 350 Mikron in Pulverform oder in Flüssigkeit gelöst, jedoch nicht in aerosoler Form, direkt auf die Blatt- oder Nadeloberflächen der Grünpflanzen aufgebracht wird.

2. Verfahren gemäss Anspruch 1, dadurch gekennzeichnet, dass das Präparat durch Fluggeräte, wie Flächenflugzeuge, Helicopter und Luftschiffe mit Hilfe von Ausbringvorrichtungen, wie Düsen, Atomisatoren und Streuer in Pulver- bzw. Staubform oder in Wasser auf die Blatt- oder Nadeloberflächen appliziert wird.

3. Verfahren gemäss Anspruch 1, dadurch gekennzeichnet, dass das Präparat durch Bodengeräte, wie Bestäubungsapparate, Gebläse, Pumpen und Düsen in trockener Form als Staub oder in Flüssigkeit auf die Blatt- oder Nadeloberflächen appliziert wird.

4. Verfahren nach einem der Ansprüche 1 bis 3, dadurch gekennzeichnet, dass das aufzubringende Präparat zusätzlich Magnesiumoxidbestandteile enthält.

5. Verfahren nach einem der Ansprüche 1 bis 4, dadurch gekennzeichnet, dass das aufzubringende Präparat zusätzlich mindestens ein Pestizid und/oder eine Anreicherung von Pflanzennährstoffen beigemengt enthält.

6. Verwendung eines mindestens dolomitischen Kalkhydrat oder Kalkhydrat wie es aus calcitischem Gestein erhältlich ist, enthaltendes oder aus solchem bestehendes, in feinverteilter Pulverform mit einer Korngrösse kleiner als 350 Mikron, vorzugsweise kleiner als 90 Mikron oder in Flüssigkeit gelöst bzw. suspendiert vorliegendes Präparat zur Durchfuhrung des Verfahrens nach einem der Ansprüche 1 bis 5.

## Claims

1. A process for combating or avoiding the harmful effects on green plants of toxic substances in the air, characterized by one or several applications per seasonal cycle of dolomitic calcium hydroxide or calcium hydroxide (Ca(OH)₂) as derived from calcitic rock, as a finely dispersed powder with a particle size smaller than 350 microns, either in the form of dusting powder or suspended or dissolved in liquid, but not as an aerosol, applied directly to the surfaces of the leaves or needles of the green plants concerned.

2. A process according to claim 1, characterized by, that-the preparation in dust or powder form, or suspended or dissolved in water, is applied by fixed or rotary wing aircraft or airship by means of applicators such as nozzles, atomisers or spreaders to the needle or leaf surfaces.

3. A process according to claim 1, characterized by, that the preparation concerned is applied by surface vehicles such as dusters, blowers, pumps or nozzles, in dust or powder form or dissolved or suspended in water, to the needle or leaf surfaces.

4. A process according to any of the claims 1 to 3, characterized by, that the preparation to be applied contains magnesium oxides in addition.

5. A process according to any of the claims 1 to 4, characterized by, that the preparation to be applied contains at least a pesticide and/or is enriched with plant nutrients.

6. The use of dolomitic calcium hydroxide or clacium hydroxide as derived from calcitic rock, as a finely dispersed powder, with a particle size smaller than 350 microns, preferably smaller than 90 microns, or dissolved or suspended in liquid, in the applicable preparation for carrying out the process according to one of the claims 1 to 5.

## Revendications

1. Procédé pour lutter contre ou empêcher les dégâts causés aux plantes vertes par les matières nocives en suspension dans l'air, caractérisé en ce qu'on applique, une ou plusieurs fois par cycle saisonnier, de l'hydroxyde de calcium dolomitique ou de l'hydroxyde de calcium (Ca(OH)₂) provenant de calcite, en poudre très fine avec des particules d'une taille inférieure à 350 microns, soit sous forme de poudre ou en suspension ou dissoute dans un liquide, mais pas sous forme d'aérosol, directement à toutes les surfaces des feuilles ou aux aiguilles des plantes vertes à traiter.

2. Procédé selon la revendication 1, caractérisé en ce que la préparation en forme de poudre ou en suspension ou dissoute dans l'eau, est appliquée aux surfaces foliaires ou aux aiguilles soit d'un avion à ailes fixes ou tournantes soit d'aéronefs au moyen d'applicateurs du genre buses, pulvérisateurs atomiseurs ou épandeurs.

3. Procédé selon la revendication 1, caractérisé en ce que la préparation en question, en forme de poudre ou en suspension ou dissoute dans l'eau, est appliquée aux surfaces foliaires ou aux aiguilles au moyen d'appareils terrestres tels poudreuses, souffleurs, pompes ou buses.

4. Procédé selon l'une quelconque des revendications 1 à 3, caractérisé en ce que la préparation à appliquer contient en outre des oxydes de magnésium.

5. Procédé selon l'une quelconque des revendications 1 à 4, caractérisé en ce que la préparation à appliquer contient au moins un ou plusieurs pesticides et/ou est enrichie par l'addition de substances nutritives pour plantes.

6. Utilisation d'hydroxyde de calcium dolomitique ou d'hydroxyde de calcium provenant de calcite, en poudre fine avec des particules d'une taille inférieure à 350 microns et de préférence inférieur à 90 microns, ou en suspension ou dissoute dans un liquide, dans la préparation requise pour mettre en oeuvre le procédé selon l'une quelconque des revendications 1 à 5.
